# EUROPEAN PATENT APPLICATION

(11) **EP 4 852 203 A1**
(43) Date of publication of application: **09.12.2026**
(21) Application number: 25747691.1
(22) Date of filing: 22.01.2025
(51) Int. Cl.: H01M 50/507

(54) **BATTERY PACK AND ELECTRIC DEVICE**

(30) Priority: 04.02.2024 CN 202410160199
(71) Applicant: Xiamen Ampack Technology Limited, Xiamen City, Fujian Province, 361000 (CN)
(72) Inventor: WANG, Shenbo, Xiamen, Fujian 361000 (CN); WU, Mingjie, Xiamen, Fujian 361000 (CN); HU, Lijuan, Xiamen, Fujian 361000 (CN)
(74) Representative: Kraus & Lederer PartGmbB
(86) International application number: PCT/CN2025/073954
(87) International publication number: WO 2025/162120

(57) **Abstract**

A battery pack and an electric device are provided. The battery pack comprises a case (2), a battery cell assembly (1), a plurality of busbar assemblies (3), and a sampling assembly (4). The battery cell assembly (1) is accommodated in the case (2). The battery cell assembly (1) comprises a plurality of battery cells (11) arranged along a first direction. Each battery cell (11) comprises a first electrical connection end and a second electrical connection end arranged opposite to each other in the first direction. Each busbar assembly (3) connects adjacent battery cells (11). The busbar assembly (3) comprises a first busbar (31) and a second busbar (32). In two adjacent battery cells (11), the first busbar (31) is connected to the first electrical connection end of one of the battery cells (11), and the second busbar (32) is connected to the second electrical connection end of the other one of the battery cells (11). The sampling assembly (4) comprises a base (41) and a plurality of conductive parts (42). The plurality of conductive parts (42) are arranged on the base (41) at intervals along the first direction. Each of the conductive parts (42) is connected to the first busbar (31) and the second busbar (32) of a respective one of the busbar assemblies (3).

## Description

The present application claims priority to Chinese Patent Application No. 202410160199.8, filed on February 4, 2024 and entitled "BATTERY PACK AND ELECTRIC DEVICE", which is incorporated herein by reference in its entirety.

### TECHNICAL FIELD

The present application relates to the field of batteries, and in particular to a battery pack and an electric device.

### BACKGROUND

A rechargeable battery cell refers to a battery cell that can be recharged after discharge to reactivate active materials for continued use. Rechargeable battery cells are widely used in electronic devices, such as mobile phones, laptop computers, and drones.

A battery pack typically includes a plurality of battery cells to meet voltage requirements of electronic devices. In the development of battery technology, how to improve the overcurrent capability of battery packs has always been a research focus in the industry.

### SUMMARY

The present application provides a battery pack and an electric device, so as to improve the overcurrent capability of the battery pack.

According to a first aspect, the present application provides a battery pack. The battery pack includes a case, a battery cell assembly, a plurality of busbar assemblies, and a sampling assembly. The battery cell assembly is accommodated in the case, and the battery cell assembly includes a plurality of battery cells arranged along a first direction. Each battery cell includes a first electrical connection end and a second electrical connection end arranged opposite to each other in the first direction. Each of the busbar assemblies connects adjacent battery cells. The busbar assembly includes a first busbar and a second busbar. In two adjacent battery cells, the first busbar is connected to the first electrical connection end of one of the battery cells, and the second busbar is connected to the second electrical connection end of the other one of the battery cells. The sampling assembly includes a base and a plurality of conductive parts, and the plurality of conductive parts are arranged on the base at intervals along the first direction. Each of the conductive parts is connected to the first busbar and the second busbar of a respective one of the busbar assemblies.

The first busbar and the second busbar are connected to realize series connection of two adjacent battery cells, reduce heat generation of the battery pack during charging and discharging, and improve the overcurrent capability of the battery pack.

In one or more of the above optional implementations, the battery cell includes a battery cell case, the battery cell case includes a bottom wall, the bottom wall and the second electrical connection end are arranged opposite to each other in the first direction, and the bottom wall serves as the first electrical connection end.

In one or more of the above optional implementations, the battery pack includes a bracket accommodated in the case, the bracket includes a first bracket and a second bracket arranged along a second direction, and the second direction is perpendicular to the first direction. In the second direction, the battery cell assembly is disposed between the first bracket and the second bracket, and the conductive parts are disposed on a side of the second bracket, the side of the second bracket being a side facing away from the battery cell assembly. The second bracket is provided with a first bracket opening, and the first busbar and the second busbar pass through the first bracket opening and are connected to the conductive part.

By providing the first bracket opening, the first busbar and the second busbar are enabled to pass through the second bracket, thereby implementing connection of the conductive part to the first busbar and the second busbar.

In one or more of the above optional implementations, the second bracket is provided with a first recess, at least a part of the base is accommodated in the first recess, and the first bracket opening extends through the first recess.

The first recess may provide an accommodating space for the base, thereby improving space utilization and reducing the risk of interference between the base and other components. During installation of the sampling assembly, the first recess may serve as a positioning feature, thereby facilitating assembly of the sampling assembly.

In one or more of the above optional implementations, the battery cell includes a battery cell case. The second bracket is provided with a second bracket opening, the sampling assembly includes a sampling portion connected to the base, and the sampling portion passes through the second bracket opening and is connected to one of the battery cell cases. By providing the second bracket opening, the sampling portion is enabled to be directly connected to the battery cell, thereby improving sampling accuracy of the sampling portion.

In one or more of the above optional implementations, the first busbar includes a first main body portion, a first extension portion, and a first connection portion, and the first extension portion is located between adjacent battery cells. The second busbar includes a second main body portion, a second extension portion, and a second connection portion, and the second extension portion is located between the adjacent battery cells. In the two adjacent battery cells, the first extension portion is connected to the first electrical connection end of one of the battery cells, and the second extension portion is connected to the second electrical connection end of the other one of the battery cells. In the first direction, the second main body portion and the first main body portion are arranged side by side, and the first connection portion and the second connection portion are connected to the conductive part. Along the first direction, a projection of the first extension portion and a projection of the second extension portion are spaced apart from each other, thereby reducing the risk of interference between the connection location of the first extension portion with the first electrical connection end and the connection location of the second extension portion with the second electrical connection end.

In one or more of the above optional implementations, the first extension portion includes a first section, a second section, and a first protrusion. The first section is connected to the first main body portion, and the first section is farther from the first electrical connection end than the first main body portion. The second section is connected to the first section; a projection of the second section overlaps with a projection of the second main body portion along a second direction, and the second direction is perpendicular to the first direction. The first protrusion is connected to the second section, and the first protrusion protrudes toward the first electrical connection end and is connected to the first electrical connection end.

The first protrusion is disposed to protrude, and this can reduce the gap between the first protrusion and the first electrical connection end during assembly of the battery cell and the first busbar, thereby improving the connection strength between the first extension portion and the first electrical connection end. By bending the first section, the second section and the second main body portion are enabled to share space in the first direction, thereby improving space utilization and reducing space waste caused by providing the first protrusion. When the battery pack is subjected to external force, the bent first section may elastically deform, thereby releasing stress and reducing the risk of connection failure between the first protrusion and the first electrical connection end.

In one or more of the above optional implementations, the second main body portion and the second extension portion define a first space, and the second section is located in the first space, thereby helping to reduce space occupied by the first extension portion and the second extension portion in the first direction.

In one or more of the above optional implementations, the battery pack includes a first insulating member, and at least a part of the first insulating member is disposed between adjacent battery cells. The battery cell includes a battery cell case, and the battery cell case includes a first electrical connection end. In the first direction, at least a part of the first insulating member is disposed between the battery cell case of one of the battery cells and the second main body portion, where the battery cell is connected to the second busbar. The first insulating member may separate the second main body portion from the battery cell case, thereby reducing the risk of short circuit between the second busbar and the battery cell case of the same battery cell.

In one or more of the above optional implementations, the battery pack includes a circuit board assembly and a first conductive member, and the battery cell assembly and the circuit board assembly are arranged along the first direction. One end of the first conductive member is connected to the battery cell closest to the circuit board assembly, and the other end extends out of the bracket and is connected to the circuit board assembly.

In one or more of the above optional implementations, the first conductive member is configured to transmit power of the battery cell assembly.

In one or more of the above optional implementations, the battery pack includes a second conductive member, the second conductive member includes a first conductive section, a second conductive section, and a third conductive section, the first conductive section is disposed outside the bracket, the second conductive section is connected to the circuit board assembly, and the third conductive section passes through the first bracket and is connected to the battery cell farthest from the circuit board assembly.

In one or more of the above optional implementations, the second conductive member is configured to transmit power of the battery cell assembly.

In one or more of the above optional implementations, along the second direction, the first conductive section and the sampling assembly are disposed on opposite sides of the bracket. The bracket separates the first conductive section from the sampling assembly, thereby reducing mutual interference.

In one or more of the above optional implementations, the conductive parts are located on a side of the base facing away from the battery cell assembly. The base is provided with a first opening, and the first busbar and the second busbar pass through the first opening and are connected to the conductive part.

In one or more of the above optional implementations, the sampling assembly is configured to transmit electrical signals of the battery cell assembly.

In one or more of the above optional implementations, the battery pack includes a bracket accommodated in the case, and the battery cell assembly is disposed within the bracket. The bracket includes a third bracket opening, the battery pack includes an adhesive member, at least a part of the adhesive member is disposed in the third bracket opening, and the battery cell assembly, the bracket, and the case are bonded by the adhesive member, thereby improving the overall strength of the battery pack. When the battery pack is subjected to external force, the adhesive member may restrict the movement of the battery cell assembly in the case, thereby improving the stability of the battery cell assembly. In one or more of the above optional implementations, the battery cell assembly is bonded to the first bracket and/or the second bracket.

In one or more of the above optional implementations, the case includes a first case opening. The first case opening is configured to allow an insulating material to flow into the case through the first case opening and into the bracket through the third bracket opening, and the insulating material is cured to form the adhesive member.

In one or more of the above optional implementations, the battery cell is a cylindrical battery cell.

In one or more of the above optional implementations, the circuit board assembly includes a first circuit board, and both the sampling assembly and the first conductive member are connected to the first circuit board.

In one or more of the above optional implementations, the circuit board assembly includes a second circuit board, and the second conductive member is connected to the second circuit board.

According to a second aspect, the present application provides an electric device, the electric device including the battery pack according to any implementation of the first aspect.

### BRIEF DESCRIPTION OF DRAWINGS

The features, advantages and technical effects of exemplary embodiments of the present application will be described below with reference to the accompanying drawings.
FIG. 1 is a schematic structural diagram of a battery pack according to some embodiments of the present application;
FIG. 2 is a schematic cross-sectional view of the battery pack shown in FIG. 1;
FIG. 3 is a schematic exploded view of the battery pack shown in FIG. 1;
FIG. 4 is a schematic structural diagram of a battery cell according to some embodiments of the present application;
FIG. 5 is a schematic diagram of the battery cell shown in FIG. 4 after being connected to a first busbar;
FIG. 6 is a schematic diagram of the battery cell shown in FIG. 4 after being connected to a second busbar;
FIG. 7 is a schematic structural diagram of a busbar assembly according to some embodiments of the present application;
FIG. 8 is a schematic structural diagram of the first busbar shown in FIG. 7;
FIG. 9 is a schematic structural diagram of the second busbar shown in FIG. 7;
FIG. 10 is a schematic diagram of a partial structure of a battery pack according to some embodiments of the present application;
FIG. 11 is an enlarged schematic diagram of the circular frame portion in FIG. 10;
FIG. 12 is an enlarged schematic diagram of box A in FIG. 2;
FIG. 13 is a schematic structural diagram of a second bracket according to some embodiments of the present application;
FIG. 14 is a schematic diagram of a first bracket and a second conductive member according to some embodiments of the present application;
FIG. 15 is an enlarged schematic diagram of circular frame B in FIG. 2;
FIG. 16 is another schematic diagram of a partial structure of a battery pack according to some embodiments of the present application;
FIG. 17 is an enlarged schematic diagram of the circular frame portion in FIG. 16; and
FIG. 18 is an enlarged schematic diagram of circular frame C in FIG. 2.

The reference numerals of the specific embodiments are as follows:

| | | | | | | |
|---|---|---|---|---|---|---|
| 1. battery cell assembly | | | | 5. bracket | | |
| | 11. battery cell | | | | 51. first bracket | |
| | | | 111. battery cell case | | | 511. third recess |
| | | 1111. bottom wall | | | | 512. second protrusion |
| | | 112. electrode terminal | | | 52. second bracket | |
| | | 113. electrode assembly | | | | 521. first bracket opening |
| | | 114. pressure relief portion | | | | 522. first recess |
| 115. | second insulating member | | | | | 523. second bracket opening |
| | 2. case | | | | | |
| | 21. first case opening | | | | | 524. fourth recess |
| | 22. second case | | | | | 525. second recess |
| | | 23. first case | | | 53. third bracket opening | |
| 231. second case opening | | | | 6. first insulating member | | |
| | 3. busbar assembly | | | 7. adhesive member | | |
| | | 31. first busbar | | 8. circuit board assembly | | |
| | | 311. first main body portion | | | 81. first circuit board | |
| | | | 312. first extension portion | | 82. second circuit board | |
| | | | | | 83. connector | |
| | | | 3121. first section | 9. first conductive member | | |
| | | | 3122. second section | | 91. fourth conductive section | |
| | | 3123. first protrusion | | | 92. bent segment | |
| | 313. first connection portion | | | | 93. fifth conductive section | |
| | | 32. second busbar | | 10. second conductive member | | |
| | | 321. second main body portion | | | 101. first conductive section | |
| | | | | | 102. second conductive section | |
| | | | 322. second extension portion | | 103. third conductive section | |
| | | | | 10a. fixing member | | |
| | | | 3221. third section | 10b. third case | | |
| | | 3222. third protrusion | | 10c. third case opening | | |
| | | 323. second connection portion | | X. third direction | | |
| | | | | Y. second direction | | |
| | | 32a. first space | | Z. first direction | | |
| | 4. sampling assembly | | | | | |
| | | 41. base | | | | |
| | 411. first opening | | | | | |
| | 42. conductive part | | | | | |
| | 43. sampling portion | | | | | |
| | 44. third insulating member | | | | | |

### DETAILED DESCRIPTION

To make the objectives, technical solutions, and advantages of the embodiments of the present application clearer, the technical solutions in the embodiments of the present application will be clearly described below with reference to the accompanying drawings in the embodiments of the present application. Apparently, the described embodiments are a part of the embodiments of the present application, rather than all of the embodiments.

In the description of the present application, it should be noted that, unless otherwise clearly specified and limited, the terms "install", "connect", and the like should be understood in a broad sense. For example, it may be a fixed connection, a detachable connection, or an integral connection; it may be a direct connection or an indirect connection through an intermediate medium, and it may be internal communication between two elements. For those of ordinary skill in the art, specific meanings of the above terms in the present application can be understood according to specific circumstances.

In the embodiments of the present application, "parallel" includes not only the case of absolute parallelism, but also the case of approximate parallelism as conventionally recognized in engineering; at the same time, "perpendicular" includes not only the case of absolute perpendicularity, but also the case of approximate perpendicularity as conventionally understood in engineering. For example, if an angle between two directions is 85° to 90°, the two directions may be considered perpendicular; if an angle between two directions is 0° to 5°, the two directions may be considered parallel.

In a first direction includes a first direction and a direction opposite to the first direction. In a second direction includes a second direction and a direction opposite to the second direction. In a third direction includes a third direction and a direction opposite to the third direction.

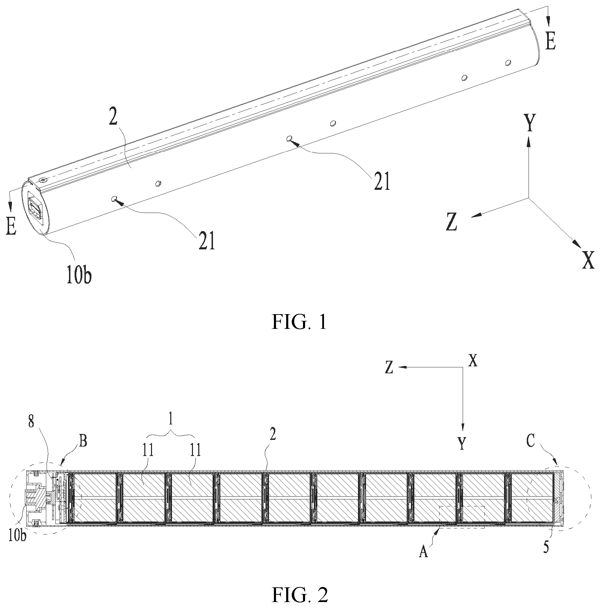

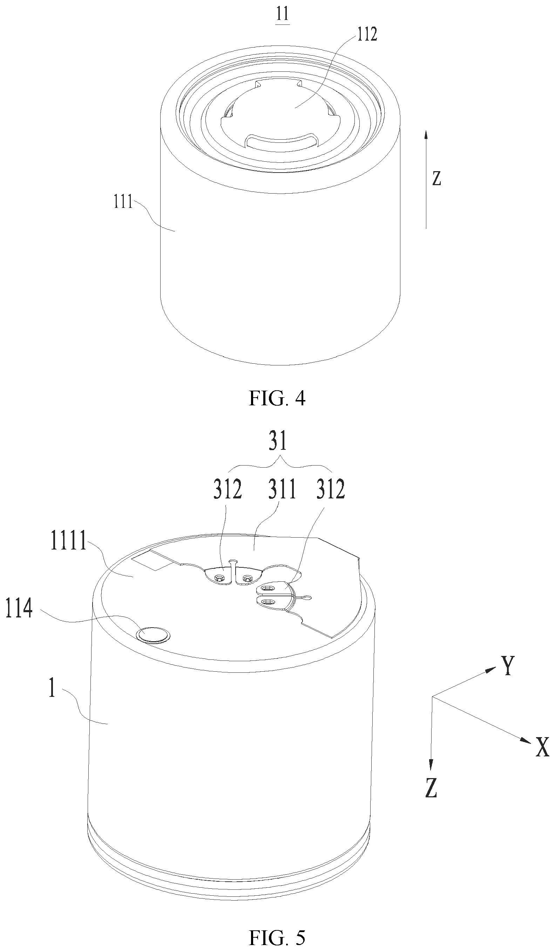

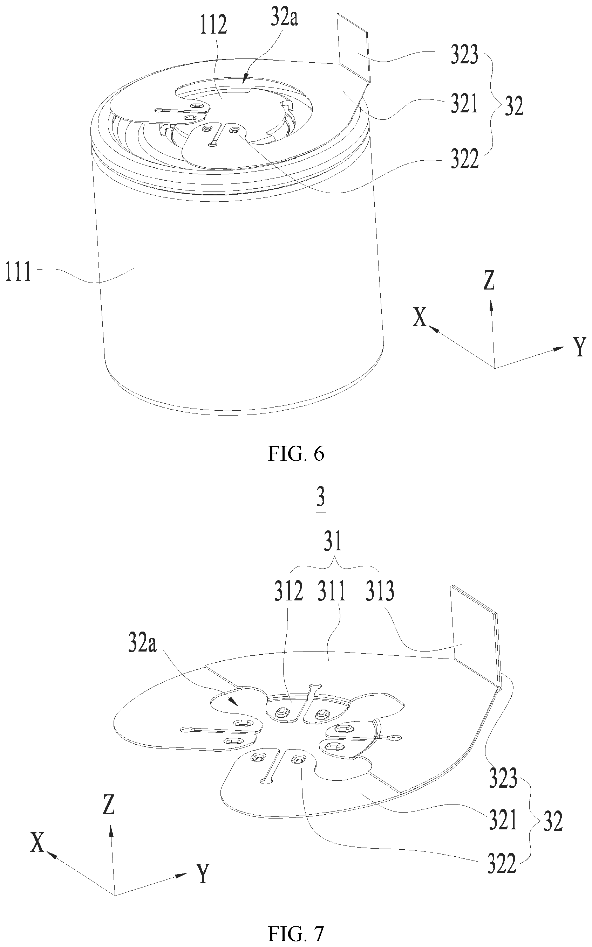

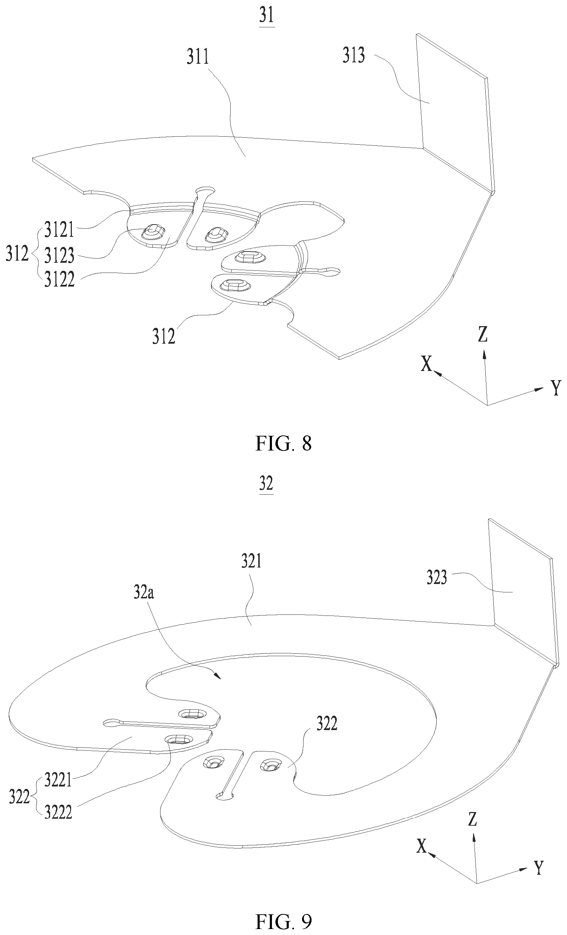

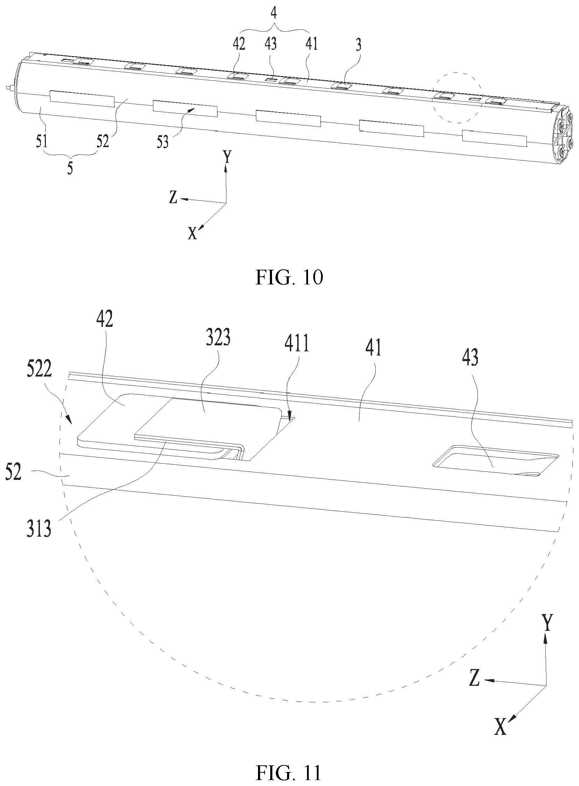

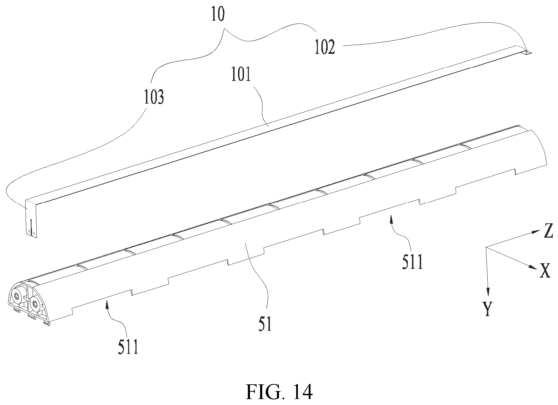

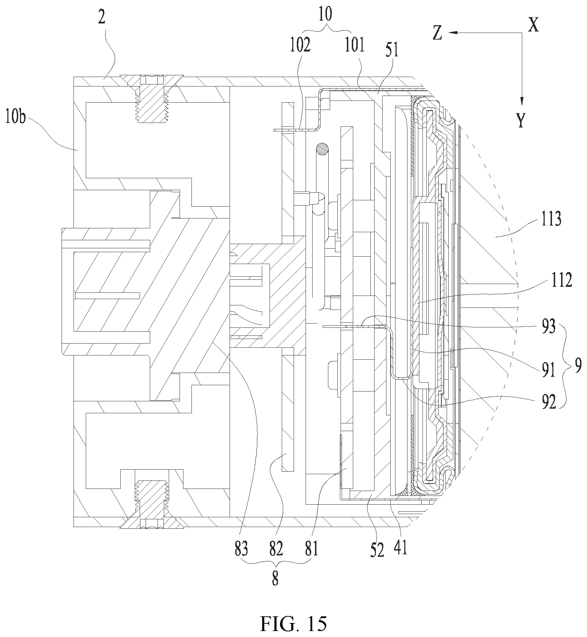

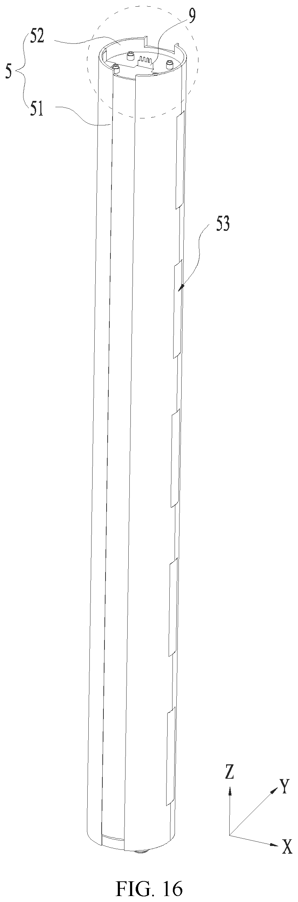

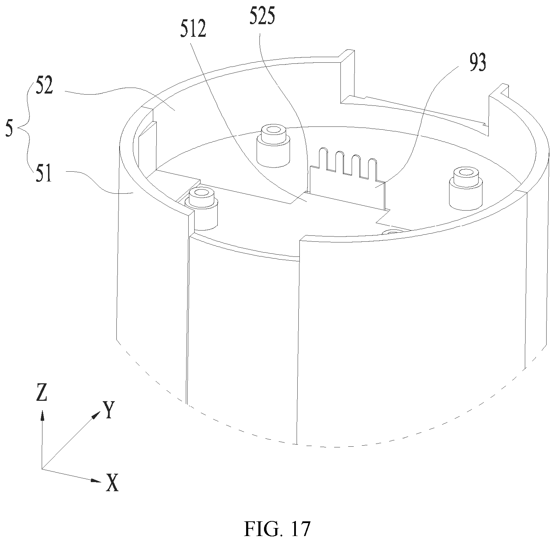

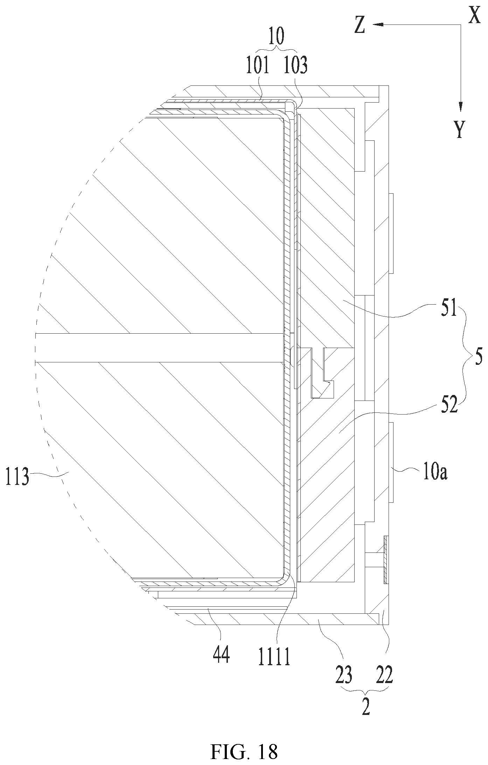

Referring to FIG. 1 to FIG. 18, an embodiment of the present application provides a battery pack, the battery pack including a case 2 and a battery cell assembly 1 accommodated in the case 2.

The battery cell assembly 1 includes a plurality of battery cells 11. The battery cell 11 may be a lithium-ion battery cell, a sodium-lithium-ion battery cell, a sodium-ion battery cell, a magnesium-ion battery cell, or another type of battery cell.

The battery cell 11 may be a hard-shell battery cell or a pouch battery cell. Optionally, the battery cell 11 is a hard-shell battery cell.

The battery cell 11 may be a prismatic battery cell, a cylindrical battery cell, or another shaped battery cell. Optionally, the battery cell is a cylindrical battery cell, for example, the battery cell may be a 21700 battery cell, a 18650 battery cell, a 46800 battery cell, a 49480 battery cell, or another type of cylindrical battery cell.

In some embodiments, the plurality of battery cells 11 may be connected in series, in parallel, or in a series-parallel connection. A series-parallel connection means that a connection manner among the plurality of battery cells 11 includes both series connection and parallel connection. Optionally, the plurality of battery cells 11 of the battery cell assembly 1 are connected in series.

In some embodiments, the case 2 may be a prismatic case, a cylindrical case, or a case of another shape.

The case 2 may be a metal case, a plastic case, a metal-plastic composite case, or a case made of other materials.

The case 2 may be an integrally formed case or a case formed by assembling a plurality of separately formed parts.

In some embodiments, the case 2 is a metal case, and the metal case has relatively high strength.

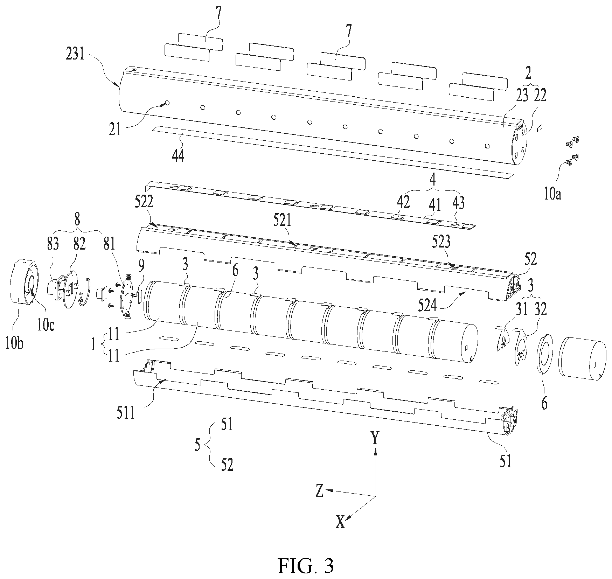

In some embodiments, the plurality of battery cells 11 are arranged along a first direction Z. Optionally, referring to FIG. 3, the plurality of battery cells 11 form a single-row structure along the first direction Z. Optionally, the plurality of battery cells 11 form a multi-row structure along the first direction Z. For example, the battery cell assembly 1 includes 10 battery cells 11, where 5 battery cells form a single-row structure along the first direction Z, and 5 battery cells form another single-row structure along the first direction Z.

In some embodiments, each of the battery cells 11 includes a first electrical connection end and a second electrical connection end arranged opposite to each other along the first direction Z. Optionally, the polarities of the first electrical connection end and the second electrical connection end are opposite, that is, one of the first electrical connection end and the second electrical connection end is a positive electrode electrical connection end, and the other of the first electrical connection end and the second electrical connection end is a negative electrode electrical connection end.

In some embodiments, the battery cell 11 includes a battery cell case 111 and an electrode terminal 112.

In some embodiments, the battery cell 11 includes two electrode terminals 112, and the two electrode terminals 112 are respectively disposed at two ends of the battery cell case 111 along the first direction Z. Optionally, one of the electrode terminals 112 serves as the first electrical connection end, and the other electrode terminal 112 serves as the second electrical connection end.

In some embodiments, the battery cell 11 includes an electrode assembly 113 accommodated in the battery cell case 111. The electrode assembly 113 includes a positive electrode plate and a negative electrode plate; during the charging and discharging process of the battery cell 11, active ions (such as lithium ions) are intercalated and deintercalated back and forth between the positive electrode plate and the negative electrode plate.

In some embodiments, the electrode assembly 113 includes a separator disposed between the positive electrode plate and the negative electrode plate, and the separator separates the positive electrode plate from the negative electrode plate to insulate the positive electrode plate from the negative electrode plate. The separator can reduce the risk of short circuit between the positive and negative electrode plates while allowing active ions to pass through.

In some embodiments, one of the positive electrode plate and the negative electrode plate is electrically connected to the first electrical connection end, and the other is electrically connected to the second electrical connection end.

For example, the battery cell case 111 serves as the first electrical connection end, the electrode terminal 112 serves as the second electrical connection end, the positive electrode plate is electrically connected to the electrode terminal 112, and the negative electrode plate is electrically connected to the battery cell case 111. In this case, the electrode terminal 112 may serve as the positive electrode of the battery cell 11, and the battery cell case 111 may serve as the negative electrode of the battery cell 11. Alternatively, the positive electrode plate is electrically connected to the battery cell case 111, and the negative electrode plate is electrically connected to the electrode terminal 112. In this case, the electrode terminal 112 may serve as the negative electrode of the battery cell 11, and the battery cell case 111 may serve as the positive electrode of the battery cell 11.

In some embodiments, the battery cell case 111 is used to encapsulate the electrode assembly 113, electrolyte, and another component. The battery cell case 111 may be a steel shell, an aluminum shell, a composite metal shell (such as a copper-aluminum composite shell), or another conductive shell.

In other embodiments, the battery cell case 111 includes metal, the battery cell case 111 serves as the first electrical connection end, and the electrode terminal 112 serves as the second electrical connection end. The polarity of the electrode terminal 112 is opposite to the polarity of the battery cell case 111.

In some embodiments, the battery cell case 111 includes a bottom wall 1111, and the bottom wall 1111 and the electrode terminal 112 are arranged opposite to each other in the first direction Z.

In some embodiments, the bottom wall 1111 serves as the first electrical connection end, thereby omitting a conventional electrode terminal and simplifying the structure of the battery cell 11.

In some embodiments, two battery cells 11 adjacent along the first direction Z are connected in series. For example, in two adjacent battery cells 11, the bottom wall 1111 and the electrode terminal 112 of each of the battery cells 11 are arranged opposite to each other along the first direction Z; the electrode terminal 112 of one of the battery cells 11 abuts against the bottom wall 1111 of the other one of the battery cells 11 along the first direction Z, so that the two battery cells 11 are connected in series.

In some embodiments, two battery cells 11 adjacent along the first direction Z are connected in parallel. The bottom walls 1111 of the two battery cells 11 are opposite to each other and connected, so that the two battery cells 11 are connected in parallel; or the electrode terminals 112 of the two battery cells 11 are opposite to each other and connected, so that the two battery cells 11 are connected in parallel.

In some embodiments, the electrode terminal 112 may be connected to the battery cell case 111. For example, the battery cell 11 includes a second insulating member 115, at least a part of the second insulating member 115 is located between the electrode terminal 112 and the battery cell case 111, and separates the electrode terminal 112 from the battery cell case 111 to insulate the electrode terminal 112 from the battery cell case 111, thereby reducing the risk of short circuit.

In some embodiments, the battery cell 11 includes a pressure relief portion 114 provided on the battery cell case 111. When the battery cell 11 is abnormal, the pressure relief portion 114 is activated and forms a pressure relief opening, and internal materials of the battery cell 11 are discharged to the outside of the battery cell 11 through the pressure relief opening to reduce the risk of explosion of the battery cell 11. Optionally, the pressure relief portion 114 is disposed on the bottom wall 1111.

In some examples, the pressure relief portion 114 is integrally formed with the battery cell case 111; in an alternative example, the pressure relief portion 114 is formed separately from the battery cell case 111, and the two may be connected by bonding, welding, or other processes. Optionally, the pressure relief portion 114 may include a pressure relief valve.

In some embodiments, welding includes but is not limited to laser welding, ultrasonic welding, and resistance welding.

In some embodiments, the pressure relief portion 114 may adopt a pressure-sensitive or temperature-sensitive element. When the internal pressure or temperature of the battery cell 11 reaches a threshold, the pressure relief portion 114 performs an action or a weak structure provided in the pressure relief portion 114 is destroyed, thereby forming a pressure relief opening for releasing internal pressure or temperature.

In some embodiments, the battery pack includes a plurality of busbar assemblies 3. Each of the busbar assemblies 3 connects adjacent battery cells 11.

The busbar assembly 3 may connect two adjacent battery cells 11 in series or in parallel. Optionally, in two adjacent battery cells 11, the battery cell case 111 and the electrode terminal 112 of each battery cell 11 are arranged opposite to each other along the first direction Z; the busbar assembly 3 is connected to the electrode terminal 112 of one battery cell 11, and the busbar assembly 3 is connected to the battery cell case 111 of the other one of the battery cells 11, so that two adjacent battery cells 11 are connected in series.

In some embodiments, the battery pack includes a plurality of busbar assemblies 3, the plurality of busbar assemblies 3 are arranged along the first direction Z, and one busbar assembly 3 connects two adjacent battery cells 11. Optionally, the plurality of busbar assemblies 3 connect the plurality of battery cells 11 of the battery cell assembly 1 in series.

In some embodiments, the busbar assembly 3 includes a first busbar 31 and a second busbar 32. In two adjacent battery cells 11, the first busbar 31 is connected to the first electrical connection end of one of the battery cells 11, and the second busbar 32 is connected to the second electrical connection end of the other one of the battery cells 11.

For example, in two adjacent battery cells 11, the first busbar 31 is connected to the bottom wall 1111 of one of the battery cells 11, and the second busbar 32 is connected to the electrode terminal 112 of the other one of the battery cells 11.

The first busbar 31 may be connected to the bottom wall 1111 by welding, bonding, snap-fitting, or other means, and the second busbar 32 may be connected to the electrode terminal 112 by welding, bonding, snap-fitting, or other means.

In some embodiments, the battery pack includes a sampling assembly 4. The sampling assembly 4 includes a base 41 and a plurality of conductive parts 42, the plurality of conductive parts 42 are arranged on the base 41 at intervals along the first direction Z, and each of the conductive parts 42 is connected to the first busbar 31 and the second busbar 32 of a respective one of the busbar assemblies 3.

Optionally, the number of the conductive parts 42 is the same as the number of the busbar assemblies 3, and the conductive parts 42 are provided in one-to-one correspondence with the busbar assemblies 3.

In the embodiments of the present application, the first busbar 31 and the second busbar 32 are connected, thereby conducting the first electrical connection end of one battery cell 11 with the second electrical connection end of an adjacent battery cell 11, achieving series connection of two adjacent battery cells 11, reducing heat generation of the battery pack during the charging and discharging process, and improving the overcurrent capability of the battery pack.

In some embodiments, the sampling assembly 4 is configured to transmit electrical signals of the battery cell assembly 1. For example, the electrical signal may include at least one of a voltage signal, a current signal, or a temperature signal.

The sampling assembly 4 may be connected to the first busbar 31 and the second busbar 32 to transmit the electrical signals of the battery cell assembly 1, thereby simplifying the structure of the battery pack.

In some embodiments, the battery pack includes a bracket 5 accommodated in the case 2. For example, the bracket 5 may be used to support the battery cell assembly 1.

In some embodiments, the bracket 5 has an inner cavity, and the battery cell assembly 1 may be disposed in the inner cavity of the bracket 5.

In some embodiments, the bracket 5 includes a first bracket 51 and a second bracket 52 arranged along a second direction Y, and the second direction Y is perpendicular to the first direction Z. In the second direction Y, the battery cell assembly 1 is disposed between the first bracket 51 and the second bracket 52.

For example, the first bracket 51 and the second bracket 52 may clamp the battery cell assembly 1 from two sides. When the battery pack is subjected to external force, the first bracket 51 and the second bracket 52 may restrict the movement of the battery cell assembly 1 in the case 2, improve the stability of the connection among the first busbar 31, the second busbar 32, the conductive part 42, and the battery cell 11, reduce the risk of open circuit, and improve the stability and reliability of the battery pack.

In some embodiments, the first bracket 51 is connected to the second bracket 52. For example, the first bracket 51 is connected to the second bracket 52 by snap-fitting, fastener connection, bonding, or other means.

In some embodiments, the battery cell 11 is a cylindrical battery cell, both the first bracket 51 and the second bracket 52 include arc-shaped walls, and the arc-shaped walls may cooperate with the arc-shaped surface of the cylindrical battery cell.

In some embodiments, both the first bracket 51 and the second bracket 52 are insulating brackets, and the first bracket 51 and the second bracket 52 may separate the battery cell assembly 1 from the case 2, thereby reducing the risk of short circuit.

In some embodiments, the sampling assembly 4 is located on a side of the second bracket 52, the side of the second bracket 52 being a side facing away from the battery cell assembly 1. The second bracket 52 is provided with a first bracket opening 521, and the busbar assembly 3 passes through the first bracket opening 521 and is connected to the sampling assembly 4.

In some embodiments, the conductive parts 42 are disposed on a side of the second bracket 52, the side of the second bracket 52 being a side facing away from the battery cell assembly 1. The second bracket 52 is provided with a first bracket opening 521, and the first busbar 31 and the second busbar 32 pass through the first bracket opening 521 and are connected to the conductive part 42.

By providing the first bracket opening 521, the first busbar 31 and the second busbar 32 are enabled to pass through the second bracket 52, thereby implementing connection of the conductive part 42 to the first busbar 31 and the second busbar 32.

In some embodiments, a plurality of first bracket openings 521 are provided, and the plurality of first bracket openings 521 are arranged at intervals along the first direction Z. The first busbar 31 and the second busbar 32 of one busbar assembly 3 pass through the same first bracket opening 521.

Optionally, the number of the first bracket openings 521 is the same as the number of the busbar assemblies 3, and the first bracket openings 521 are provided in one-to-one correspondence with the busbar assemblies 3.

In some embodiments, the second bracket 52 is provided with a first recess 522. At least a part of the base 41 is accommodated in the first recess 522, and the first bracket opening 521 extends through the first recess 522.

The first recess 522 may provide an accommodating space for the base 41, thereby improving space utilization and reducing the risk of interference between the base 41 and other components. During installation of the sampling assembly 4, the first recess 522 may serve as a positioning feature, thereby facilitating assembly of the sampling assembly 4.

In some embodiments, a side of the second bracket 52 facing away from the battery cell assembly 1 is provided with the first recess 522.

In some embodiments, the second bracket 52 is provided with a second bracket opening 523. The sampling assembly 4 includes a sampling portion 43 connected to the base 41. The sampling portion 43 passes through the second bracket opening 523 and is connected to the battery cell case 111 of one battery cell 11 in the battery cell assembly 1. By providing the second bracket opening 523, the sampling portion 43 is enabled to be directly connected to the battery cell 11, thereby improving sampling accuracy of the sampling portion 43.

One or a plurality of sampling portions 43 may be provided.

The sampling portion 43 may be used to collect information of the battery cell 11, such as temperature.

In some embodiments, the sampling portion 43 is used to collect the temperature of the battery cell 11.

In some embodiments, the sampling portion 43 is attached to the battery cell case 111 of the battery cell 11 to improve the accuracy of temperature collection. Optionally, the sampling portion 43 is bonded to the battery cell case 111 of the battery cell 11 by thermally conductive adhesive.

In some embodiments, the sampling portion 43 includes an NTC (Negative Temperature Coefficient) temperature sensor.

In some embodiments, a plurality of second bracket openings 523 and a plurality of sampling portions 43 are provided. The plurality of second bracket openings 523 are arranged at intervals along the first direction Z, and the plurality of sampling portions 43 are arranged at intervals along the first direction Z.

Optionally, the number of the second bracket openings 523 is the same as the number of the sampling portions 43, and the second bracket openings 523 are provided in one-to-one correspondence with the sampling portions 43.

In some embodiments, the base 41 may collect the voltage of the battery cell 11 through the conductive part 42.

In some embodiments, the base 41 may include a circuit board. Optionally, the circuit board includes a printed circuit board (PCB, Printed Circuit Board). Optionally, the circuit board includes a flexible circuit board (FPC, Flexible Printed Circuit).

The plurality of conductive parts 42 and the plurality of sampling portions 43 are connected to the circuit board.

In some embodiments, the conductive part 42 includes a metal sheet.

In some embodiments, the battery pack includes a third insulating member 44, and the third insulating member 44 is disposed between the base 41 and the case 2; the third insulating member 44 is connected to the base 41 and covers the plurality of conductive parts 42.

The third insulating member 44 may separate the conductive part 42, the first busbar 31, and the second busbar 32 from the case 2 to reduce the risk of short circuit.

In some embodiments, the conductive part 42 is located on a side of the base 41, the side of the base 41being a side facing away from the battery cell assembly 1. The base 41 is provided with a first opening 411. The first busbar 31 and the second busbar 32 pass through the first opening 411 and are connected to the conductive part 42. By providing the first opening 411, the first busbar 31 and the second busbar 32 are enabled to pass through the base 41, thereby realizing connection of the conductive part 42 to the first busbar 31 and the second busbar 32.

In some embodiments, the first opening 411 and the first bracket opening 521 are arranged along the second direction Y, and the first busbar 31 and the second busbar 32 sequentially pass through the first bracket opening 521 and the first opening 411 along the second direction Y.

In some embodiments, a plurality of first openings 411 are provided, and the number of the first openings 411 is the same as the number of the first openings bracket 521. The plurality of first openings 411 are provided in one-to-one correspondence with the plurality of first bracket openings 521.

In some embodiments, the battery cell assembly 1 is bonded to the first bracket 51 and/or the second bracket 52.

Bonding the battery cell assembly 1 to at least one of the first bracket 51 and the second bracket 52 can, when the battery pack is subjected to external force, restrict the movement of the battery cell assembly 1 in the case 2, improve the stability of the connection between the first busbar 31, the second busbar 32, the conductive part 42, and the battery cell 11, reduce the risk of open circuit, and improve the stability and reliability of the battery pack.

In some embodiments, adhesive may be applied to a side of the first bracket 51 facing the battery cell assembly 1, and the adhesive bonds the battery cell assembly 1 to the first bracket 51. Optionally, each battery cell 11 is bonded to the first bracket 51 by adhesive.

In some embodiments, adhesive may be applied to a side of the second bracket 52 facing the battery cell assembly 1, and the adhesive bonds the battery cell assembly 1 to the second bracket 52. Optionally, each battery cell 11 is bonded to the second bracket 52 by adhesive.

In some embodiments, the first busbar 31 includes a first main body portion 311, a first extension portion 312, and a first connection portion 313. The first extension portion 312 is located between adjacent battery cells 11. In two adjacent battery cells 11, the first extension portion 312 is connected to the first electrical connection end of one of the battery cells 11. For example, the first extension portion 312 is connected to the bottom wall 1111 of one of the battery cells 11.

In some embodiments, the first extension portion 312 and the first connection portion 313 are connected to the first main body portion 311.

For example, the first extension portion 312 and the first connection portion 313 are connected to two sides of the first main body portion 311 respectively.

For example, the first extension portion 312 may be welded to the bottom wall 1111 of the battery cell 11, such as by laser welding.

In some embodiments, the second busbar 32 includes a second main body portion 321, a second extension portion 322, and a second connection portion 323, and the second extension portion 322 is located between adjacent battery cells 11.

In two adjacent battery cells 11, the first extension portion 312 is connected to the first electrical connection end of one of the battery cells 11, and the second extension portion 322 is connected to the second electrical connection end of the other one of the battery cells 11. For example, in two adjacent battery cells 11, the bottom wall 1111 of each battery cell 11 is the first electrical connection end, the electrode terminal 112 is the second electrical connection end, the first extension portion 312 is connected to the bottom wall 1111 of one of the battery cells 11, and the second extension portion 322 is connected to the electrode terminal 112 of the other one of the battery cells 11.

In some embodiments, the second extension portion 322 and the second connection portion 323 are connected to the second main body portion 321.

For example, the second extension portion 322 and the second connection portion 323 are connected to two sides of the second main body portion 321 respectively.

For example, the second extension portion 322 may be welded to the electrode terminal 112 of the battery cell 11, such as by laser welding.

In some embodiments, in the first direction Z, the second main body portion 321 and the first main body portion 311 are arranged side by side. In the first direction Z, the second main body portion 321 and the first main body portion 311 may completely overlap with each other or only partially overlap.

In some embodiments, in the first direction Z, the second main body portion 321 and the first main body portion 311 are in contact connection, or may be bonded by adhesive or the like. Optionally, the second main body portion 321 and the first main body portion 311 are in contact connection along the first direction Z. Thereby, space is saved in the first direction Z, and the contact area between the first busbar 31 and the second busbar 32 is increased, improving the overcurrent capability between the first busbar 31 and the second busbar 32.

In some embodiments, the first connection portion 313 and the second connection portion 323 are connected to the conductive part 42. Optionally, the first connection portion 313, the second connection portion 323, and the conductive part 42 are in contact connection. Optionally, the second connection portion 323, the first connection portion 313, and the conductive part 42 are stacked and welded by laser welding.

In some embodiments, along the first direction Z, a projection of the first extension portion 312 and a projection of the second extension portion 322 are spaced apart from each other, thereby reducing the risk of interference between the connection location of the first extension portion 312 with the first electrical connection end and the connection location of the second extension portion 322 with the second electrical connection end.

For example, when viewed along the first direction Z, the first extension portion 312 and the second extension portion 322 do not overlap.

In some embodiments, the first connection portion 313 is folded from one end of the first main body portion 311 along the second direction Y to a side of the conductive part 42 and connected to the conductive part 42, the side of the conductive part 42 being a side facing away from the base 41, and the second connection portion 323 is folded from one end of the second main body portion 321 along the second direction Y to a side of the first connection portion 313 and connected to the first connection portion 313,the side of the first connection portion 313 being a side facing away from the conductive part 42 .

In some embodiments, the second connection portion 323, the first connection portion 313, and the conductive part 42 are welded.

In some embodiments, the first extension portion 312 includes a first section 3121, the first section 3121 is connected to the first main body portion 311, and the first section 3121 is farther from the first electrical connection end of the battery cell 11 connected to the first extension portion 312 than the first main body portion 311. For example, the bottom wall 1111 of the battery cell 11 is the first electrical connection end, and the first section 3121 is farther from the bottom wall 1111 of one of two adjacent battery cells 11 than the first main body portion 311, where the battery cell 11 is the battery cell 11 connected to the first extension portion 312.

In some embodiments, the first extension portion 312 includes a second section 3122, the second section 3122 is connected to the first section 3121, and along the second direction Y, a projection of the second section 3122 overlaps with a projection of the second main body portion 321, thereby reducing the space occupied by the busbar assembly 3 in the first direction Z.

In some embodiments, the first extension portion 312 includes a first protrusion 3123, the first protrusion 3123 is connected to the second section 3122, and the first protrusion 3123 protrudes toward the first electrical connection end of the battery cell 11 connected to the first extension portion 312 and is connected to the first electrical connection end. For example, the first protrusion 3123 is connected to the bottom wall 1111 of the battery cell 11 connected to the first extension portion 312, of two adjacent battery cells 11.

The first protrusion 3123 is disposed to protrude, and this can reduce the gap between the first protrusion 3123 and the first electrical connection end during assembly of the battery cell 11 and the first busbar 31, thereby improving the connection strength between the first extension portion 312 and the first electrical connection end. By bending the first section 3121, the second section 3122 and the second main body portion 321 are enabled to share space in the first direction Z, thereby improving space utilization and reducing space waste caused by providing the first protrusion 3123. When the battery pack is subjected to external force, the bent first section 3121 may elastically deform, thereby releasing stress and reducing the risk of connection failure between the first protrusion 3123 and the first electrical connection end.

In some embodiments, the first protrusion 3123 is welded to the bottom wall 1111. By welding the first protrusion 3123 to the bottom wall 1111, the risk of cold soldering can be reduced.

In some embodiments, a plurality of first extension portions 312 are provided. Optionally, the plurality of first extension portions 312 are arranged along a circumferential direction of the battery cell 11.

In some embodiments, two opposite surfaces of the second section 3122 along the first direction Z are flush with two opposite surfaces of the second main body portion 321 along the first direction Z respectively.

In some embodiments, the second main body portion 321 and the second extension portion 322 define a first space 32a, and the second section 3122 is located in the first space 32a, thereby helping to reduce space occupied by the first extension portion 312 and the second extension portion 322 in the first direction Z.

In some embodiments, the second extension portion 322 includes a third section 3221 and a third protrusion 3222, and the third section 3221 is connected to the second main body portion 321. In two adjacent battery cells 11, the first protrusion 3123 protrudes toward the first electrical connection end of one of the battery cells 11, the third protrusion 3222 protrudes toward the second electrical connection end of the other one of the battery cells 11, and the third protrusion 3222 is connected to the second electrical connection end. For example, the third protrusion 3222 protrudes toward the electrode terminal 112 of the other battery cell 11 and is connected to the electrode terminal 112.

In some embodiments, two opposite surfaces of the third section 3221 along the first direction Z are flush with two opposite surfaces of the second main body portion 321 along the first direction Z, respectively.

In some embodiments, the third protrusion 3222 is welded to the electrode terminal 112.

In some embodiments, a plurality of second extension portions 322 are provided. The plurality of second extension portions 322 are arranged along the circumferential direction of the battery cell 11.

In some embodiments, the battery pack includes a first insulating member 6, and at least a part of the first insulating member 6 is disposed between adjacent battery cells 11. In the first direction Z, at least a part of the first insulating member 6 is disposed between the battery cell case 111 of one of the battery cells and the second main body portion 321, where the battery cell 11 is connected to the second busbar 32. The first insulating member 6 may separate the second main body portion 321 from the battery cell case 111, thereby reducing the risk of short circuit between the second busbar 32 and the battery cell case 111 of the same battery cell 11.

In some embodiments, the first insulating member 6 is an annular structure; in the first direction Z, at least a part of the first insulating member 6 is clamped between two adjacent battery cells 11.

In some embodiments, the first insulating member 6 is sealingly connected to the adjacent battery cells 11. For example, the first insulating member 6 is bonded to the adjacent battery cells 11 by adhesive. For example, the adjacent battery cells 11 reduce the gap between the first insulating member 6 and the adjacent battery cells 11 by compressing the first insulating member 6. The sealing connection between the first insulating member 6 and the battery cells 11 can reduce the risk of corrosion at the connection location between the first busbar 31 and the bottom wall 1111 and the risk of corrosion at the connection location between the second busbar 32 and the electrode terminal 112.

In some embodiments, the battery cell assembly 1 is disposed within the bracket 5. The bracket 5 includes a third bracket opening 53, the battery pack includes an adhesive member 7, and at least a part of the adhesive member 7 is disposed in the third bracket opening 53. The battery cell assembly 1, the bracket 5 and the case 2 are bonded by the adhesive member 7, thereby improving the overall strength of the battery pack. When the battery pack is subjected to external force, the adhesive member 7 may restrict the movement of the battery cell assembly 1 in the case 2, thereby improving the stability of the battery cell assembly 1.

In some embodiments, the third bracket opening 53 is configured to allow insulating material to flow into the bracket 5 through the third bracket opening 53, and the insulating material is cured to form the adhesive member 7. Optionally, the insulating material includes glue.

In some embodiments, the adhesive member 7 includes a structural adhesive. The structural adhesive may bond the battery cell assembly 1 to the case 2. The first insulating member 6 may block the flow of the structural adhesive, reducing the risk of the structural adhesive flowing between adjacent battery cells 11.

In some embodiments, the material of the adhesive member 7 is an insulating material.

In some embodiments, the third bracket opening 53 is provided on at least one side of the bracket 5 along the third direction X. The third direction X, the second direction Y and the first direction Z are perpendicular to each other.

In some embodiments, the first bracket 51 has a third recess 511, the second bracket 52 has a fourth recess 524, and the third recess 511 and the fourth recess 524 are opposite along the second direction Y and form the third bracket opening 53.

In some embodiments, a plurality of third bracket openings 53 are provided. For example, two sides of the bracket 5 along the third direction X are provided with third bracket openings 53.

In some embodiments, the case 2 includes a first case opening 21. After the bracket 5 and the battery cell assembly 1 are installed into the case 2, the first case opening 21 is configured to allow an insulating material to flow into the case 2 through the first case opening 21 and into the bracket 5 through the third bracket opening 53, and the insulating material is cured to form the adhesive member 7. Optionally, the insulating material includes glue. Optionally, the third bracket opening 53 is arranged opposite to the first case opening 21, thereby facilitating the flow of the insulating material.

In some embodiments, a part of the adhesive member 7 is accommodated in the first case opening 21. The adhesive member 7 may seal the first case opening 21, thereby improving sealing performance.

In some embodiments, a plurality of first case openings 21 are provided.

In some embodiments, each third bracket opening 53 is opposite to at least two first case openings 21. Structural adhesive may be injected into the case 2 through one first case opening 21. During the injection process of the structural adhesive, another first case opening 21 may serve as an observation port for observing the filling amount of the structural adhesive.

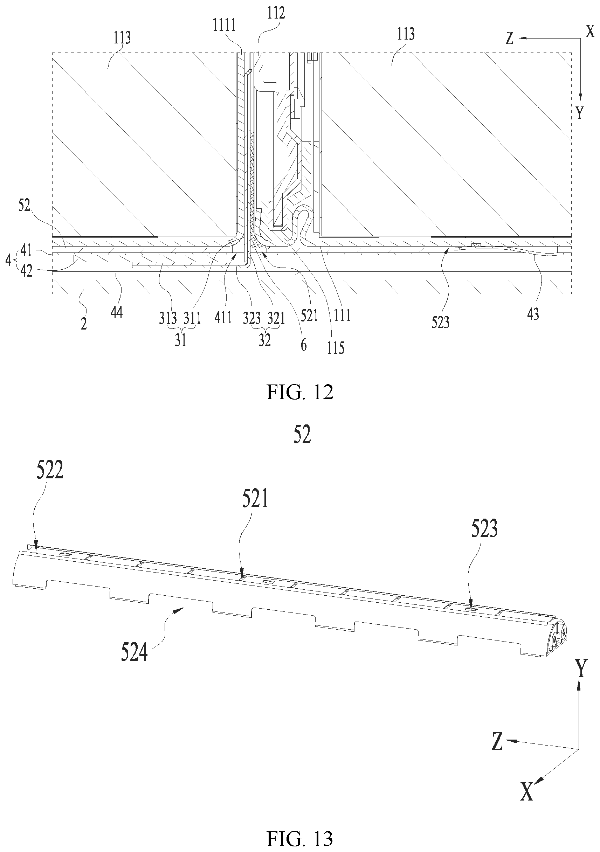

Referring to FIG. 12 to FIG. 18, in some embodiments, the battery pack includes a circuit board assembly 8 and a first conductive member 9, and the battery cell assembly 1 and the circuit board assembly 8 are arranged along the first direction Z. One end of the first conductive member 9 is connected to the battery cell 11 closest to the circuit board assembly 8, and the other end of the first conductive member 9 extends out of the bracket 5 and is connected to the circuit board assembly 8.

In some embodiments, the first conductive member 9 is configured to transmit electrical signals and/or power of the battery cell assembly 1. The electrical signal may include at least one of a voltage signal, a current signal, or a temperature signal.

In some embodiments, the circuit board assembly 8 is located outside the bracket 5.

For example, the first conductive member 9 is configured to transmit power of the battery cell assembly 1. For example, the first conductive member 9 is connected to the overall positive electrode terminal of the battery cell assembly 1.

In some embodiments, the circuit board assembly 8 includes a first circuit board 81, and both the sampling assembly 4 and the first conductive member 9 are connected to the first circuit board 81. For example, the first circuit board 81 may be a printed circuit board or a flexible circuit board.

In some embodiments, the first conductive member 9 is connected to the electrode terminal 112 of the battery cell 11 closest to the circuit board assembly 8. Optionally, the first conductive member 9 is connected to the electrode terminal 112, the electrode terminal 112 is connected to the positive electrode plate, and the first conductive member 9 is connected to the overall positive electrode terminal of the battery cell assembly 1.

In some embodiments, the first conductive member 9 includes a fourth conductive section 91, a bent segment 92, and a fifth conductive section 93. The fourth conductive section 91 is connected to the electrode terminal 112 of the battery cell 11 closest to the circuit board assembly 8, the fifth conductive section 93 passes between the first bracket 51 and the second bracket 52 and is connected to the circuit board assembly 8, the first bracket 51 and the second bracket 52 clamp the fifth conductive section 93, and the bent segment 92 connects the fourth conductive section 91 and the fifth conductive section 93.

In some embodiments, the fourth conductive section 91 and the bent segment 92 are located in the bracket 5.

The bent segment 92 may accommodate tolerances in the first direction Z, and is beneficial to reducing the tensile force of the fifth conductive section 93 on the circuit board assembly 8 through deformation when the battery pack is subjected to an external force, thereby reducing the risk of connection failure between the fifth conductive section 93 and the circuit board assembly 8.

In some embodiments, one of the first bracket 51 and the second bracket 52 is provided with a second protrusion 512, the other of the first bracket 51 and the second bracket 52 is provided with a second recess 525, the second protrusion 512 is inserted into the second recess 525, and the first conductive member 9 passes between the second protrusion 512 and the second recess 525. A matching structure of the second protrusion 512 and the second recess 525 may position the first conductive member 9 and restrict the shaking of the first conductive member 9 when the battery pack is subjected to an external force.

In some embodiments, the second bracket 52 is provided with a second recess 525, the first bracket 51 is provided with a second protrusion 512, and the fifth conductive section 93 passes between the second protrusion 512 and the second recess 525.

In some embodiments, the battery pack includes a second conductive member 10. The second conductive member 10 includes a first conductive section 101, a second conductive section 102, and a third conductive section 103. The first conductive section 101 is disposed outside the bracket 5, the second conductive section 102 is connected to the circuit board assembly 8, and the third conductive section 103 passes through the first bracket 51 and is connected to the battery cell 11 farthest from the circuit board assembly 8.

In some embodiments, the second conductive member 10 is configured to transmit electrical signals and/or power of the battery cell assembly 1. The electrical signal may include at least one of a voltage signal, a current signal, or a temperature signal.

For example, the second conductive member 10 is configured to transmit power of the battery cell assembly 1. Optionally, the second conductive member 10 is connected to the total negative electrode terminal of the battery cell 11 module.

In some embodiments, the first conductive section 101 extends along the first direction Z, and the second conductive section 102 and the third conductive section 103 are connected to two ends of the first conductive section 101 along the first direction Z respectively.

In some embodiments, the first bracket 51 and the first conductive section 101 are arranged along the second direction Y.

In some embodiments, the circuit board assembly 8 includes a second circuit board 82, and the second conductive member 10 is connected to the second circuit board 82. For example, the second circuit board 82 includes a printed circuit board or a flexible circuit board.

In some embodiments, the first circuit board 81 and the second circuit board 82 are arranged along the first direction Z.

In some embodiments, the second circuit board 82 includes a BMS (Battery Management System) assembly.

In some embodiments, along the second direction Y, the first conductive section 101 and the sampling assembly 4 are disposed on opposite sides of the bracket 5. The bracket 5 separates the first conductive section 101 from the sampling assembly 4, thereby reducing mutual interference.

In some embodiments, the case 2 includes a first case 23 and a second case 22, the battery cell assembly 1 is accommodated in the first case 23, and the second case 22 and the battery cell assembly 1 are arranged along the first direction Z.

In some embodiments, the second case 22 is connected to the first case 23. Optionally, the second case 22 is welded to the first case 23. The battery cell assembly 1 is accommodated in the space formed by the first case 23 and the second case 22.

In some embodiments, the battery pack includes a fixing member 10a. The fixing member 10a connects the second case 22 and the bracket 5 to improve the overall strength of the battery pack.

In some embodiments, the fixing member 10a includes a screw.

In some embodiments, the first case 23 is an aluminum cylinder.

In some embodiments, one end of the first case 23 along the first direction Z has a second case opening 231. The bracket 5 and the battery cell assembly 1 may be installed into the first case 23 through the second case opening 231. After the bracket 5 is installed in place, the fixing member 10a passes through the second case 22 from the outside and is fixed to the bracket 5.

In some embodiments, the battery pack includes a third case 10b, and the third case 10b is connected to the first case 23 and covers the second case opening 231. The third case 10b has a third case opening 10c, the circuit board assembly 8 includes a connector 83, the connector 83 is exposed through the third case opening 10c, and the connector 83 is configured to be connected to an electric device.

The present application provides an electric device, the electric device including at least one battery pack according to any one of the foregoing embodiments. The battery pack may provide electric energy for the operation of the electric device.

The electric device according to the embodiments of the present application may be a portable device, a laptop computer, an electric toy, a drone, an electric tool, an energy storage system, or the like. Electric tools include metal cutting electric tools, cleaning tools, or the like, for example, electric drills, electric wrenches, vacuum cleaners, robotic vacuum cleaners, power-assisted bicycles, and the like. The embodiments of the present application do not impose special limitations on the above electric devices.

In some embodiments, the electric device may include a power-assisted vehicle.

Although the present application has been described with reference to the preferred embodiments, various modifications can be made thereto and equivalents may be substituted for components thereof without departing from the scope of the present application. In particular, as long as there is no structural conflict, the technical features mentioned in the various embodiments may be combined in any manner. The present application is not limited to the specific embodiments disclosed herein, but includes all technical solutions falling within the scope of the claims.

The above description is only the preferred embodiments of the present application and is not intended to limit the present application. Any modifications, equivalent substitutions, improvements, or the like made within the spirit and principles of the present application shall be included in the protection scope of the present application.

## Claims

1. A battery pack, comprising:
a case;
a battery cell assembly accommodated in the case, wherein the battery cell assembly comprises a plurality of battery cells arranged along a first direction, and each of the battery cells comprises a first electrical connection end and a second electrical connection end arranged opposite to each other in the first direction;
a plurality of busbar assemblies, wherein each of the busbar assemblies connects adjacent ones of the battery cells, and the busbar assembly comprises a first busbar and a second busbar, wherein in two adjacent battery cells, the first busbar is connected to the first electrical connection end of one of the battery cells, and the second busbar is connected to the second electrical connection end of the other one of the battery cells; and
a sampling assembly comprising a base and a plurality of conductive parts, wherein the plurality of conductive parts is arranged on the base at intervals along the first direction, and each of the conductive parts is connected to the first busbar and the second busbar of a respective one of the busbar assemblies.

2. The battery pack according to claim 1, wherein the battery cell comprises a battery cell case, the battery cell case comprises a bottom wall, the bottom wall and the second electrical connection end are arranged opposite to each other in the first direction, and the bottom wall serves as the first electrical connection end.

3. The battery pack according to claim 1 or 2, wherein the battery pack comprises a bracket accommodated in the case, the bracket comprises a first bracket and a second bracket arranged along a second direction, and the second direction is perpendicular to the first direction;
in the second direction, the battery cell assembly is disposed between the first bracket and the second bracket, and the conductive parts are disposed on a side of the second bracket, the side of the second bracket being a side facing away from the battery cell assembly; and
the second bracket is provided with a first bracket opening, and the first busbar and the second busbar pass through the first bracket opening and are connected to the conductive part.

4. The battery pack according to claim 3, wherein the second bracket is provided with a first recess, at least part of the base is accommodated in the first recess, and the first bracket opening extends through the first recess.

5. The battery pack according to claim 3 or 4, wherein the battery cell comprises a battery cell case; and
the second bracket is provided with a second bracket opening, the sampling assembly comprises a sampling portion connected to the base, and the sampling portion passes through the second bracket opening and is connected to one of the battery cell cases.

6. The battery pack according to any one of claims 1 to 5, wherein the first busbar comprises a first main body portion, a first extension portion, and a first connection portion, and the first extension portion is located between adjacent battery cells;
the second busbar comprises a second main body portion, a second extension portion, and a second connection portion, and the second extension portion is located between the adjacent battery cells;
in the two adjacent battery cells, the first extension portion is connected to the first electrical connection end of one of the battery cells, and the second extension portion is connected to the second electrical connection end of the other one of the battery cells;
in the first direction, the second main body portion and the first main body portion are arranged side by side, and the first connection portion and the second connection portion are connected to the conductive part; and
along the first direction, a projection of the first extension portion and a projection of the second extension portion are spaced apart from each other.

7. The battery pack according to claim 6, wherein the first extension portion comprises:
a first section connected to the first main body portion, the first section being farther from the first electrical connection end than the first main body portion;
a second section connected to the first section, wherein a projection of the second section overlaps with a projection of the second main body portion along a second direction, and the second direction is perpendicular to the first direction; and
a first protrusion connected to the second section, the first protrusion protruding toward the first electrical connection end and connected to the first electrical connection end.

8. The battery pack according to claim 7, wherein the second main body portion and the second extension portion define a first space, and the second section is located in the first space.

9. The battery pack according to any one of claims 6 to 8, wherein the battery pack comprises a first insulating member, and at least part of the first insulating member is disposed between the adjacent battery cells;
the battery cell comprises a battery cell case, and the battery cell case comprises the first electrical connection end; and
in the first direction, at least a part of the first insulating member is disposed between the battery cell case of one of the battery cells and the second main body portion, and the battery cell is connected to the second busbar.

10. The battery pack according to any one of claims 3 to 5, wherein the battery pack comprises a circuit board assembly and a first conductive member, the battery cell assembly and the circuit board assembly being arranged along the first direction; and
one end of the first conductive member is connected to the battery cell closest to the circuit board assembly, and the other end extends out of the bracket and is connected to the circuit board assembly.

11. The battery pack according to claim 10, wherein the battery pack comprises a second conductive member, the second conductive member comprises a first conductive section, a second conductive section, and a third conductive section, the first conductive section is disposed outside the bracket, the second conductive section is connected to the circuit board assembly, and the third conductive section passes through the first bracket and is connected to the battery cell farthest from the circuit board assembly.

12. The battery pack according to claim 11, wherein along the second direction, the first conductive section and the sampling assembly are disposed on opposite sides of the bracket.

13. The battery pack according to any one of claims 1 to 12, wherein the conductive parts are located on a side of the base facing away from the battery cell assembly; and
the base is provided with a first opening, and the first busbar and the second busbar pass through the first opening and are connected to the conductive part.

14. The battery pack according to any one of claims 1 to 13, wherein the sampling assembly is configured to transmit electrical signals of the battery cell assembly.

15. The battery pack according to any one of claims 1 to 14, wherein the battery pack comprises a bracket accommodated in the case, and the battery cell assembly is disposed within the bracket; and
the bracket comprises a third bracket opening, the battery pack comprises an adhesive member, at least part of the adhesive member is disposed in the third bracket opening, and the battery cell assembly, the bracket, and the case are bonded by the adhesive member.

16. An electric device, comprising the battery pack according to any one of claims 1 to 15.
